Europäisches Patentamt

(19) European Patent Office

Office européen des brevets

(11) **EP 1 036 038 B1**

(12) **FASCICULE DE BREVET EUROPEEN**

(45) Date de publication et mention
de la délivrance du brevet:
**25.09.2002 Bulletin 2002/39**

(51) Int Cl.⁷: **C02F 1/64**, C02F 1/28,
B01J 20/34

(21) Numéro de dépôt: **98958303.4**

(22) Date de dépôt: **02.12.1998**

(86) Numéro de dépôt international:
**PCT/FR98/02594**

(87) Numéro de publication internationale:
**WO 99/029631 (17.06.1999 Gazette 1999/24)**

(54) **PROCEDE DE DEFERRISATION DES EAUX MINERALES FERRUGINEUSES RICHES EN GAZ CARBONIQUE**

VERFAHREN ZUR ENTEISENUNG VON KOHLENDIOXIDREICHEN MINERALWÄSSERN

METHOD FOR DEFERRIZATION OF FERRUGINOUS MINERAL WATER RICH IN CARBON DIOXIDE

(84) Etats contractants désignés:
**AT BE CH CY DE DK ES FI FR GB GR IE IT LI LU MC NL PT SE**

(30) Priorité: **04.12.1997 FR 9715303**

(43) Date de publication de la demande:
**20.09.2000 Bulletin 2000/38**

(73) Titulaire: **COMPAGNIE GERVAIS DANONE**
**92300 Levallois Perret (FR)**

(72) Inventeur: **JAUFFRET, Henri**
**F-92160 Antony (FR)**

(74) Mandataire: **Warcoin, Jacques et al**
**Cabinet Régimbeau**
**20, rue de Chazelles**
**75847 Paris cedex 17 (FR)**

(56) Documents cités:
**DE-C- 241 571**          **US-A- 5 082 570**

• **DATABASE WPI Section Ch, Week 8405 Derwent Publications Ltd., London, GB; Class D15, AN 84-026662 XP002096373 & JP 58 216780 A (MATSUSHITA ELEC IND CO LTD), 16 décembre 1983**
• **DATABASE WPI Section Ch, Week 9747 Derwent Publications Ltd., London, GB; Class D15, AN 97-507183 XP002074960 & JP 09 239361 A (TORAY IND INC), 16 septembre 1997 cité dans la demande**

**Description**

La présente invention concerne un procédé de traitement des eaux minérales ferrugineuses, riches en gaz carbonique pour en éliminer le fer et éventuellement d'autres métaux tels que le manganèse.

Le procédé traditionnel de déferrisation des eaux minérales carbonatées repose sur l'oxydation du fer par l'air ou l'air enrichi en oxygène, voire en ozone. Cette oxydation est d'autant plus efficace que le pH est élevé. On procède pour cela à une décarbonatation de façon à élever le pH, puis on injecte l'air, enrichi en oxygène ou en ozone. Après un temps de contact, un précipité d'hydroxyde de fer et de carbonate ferrique se forme et est retenu par voie mécanique. Ce type de traitement présente plusieurs inconvénients, la perte de gaz carbonique inévitable, la précipitation possible de carbonate de calcium ou de magnésium pendant le traitement et l'évolution de la flore autochtone de l'eau en milieu aérobie pendant la durée du traitement. Lorsqu'il y a filtration, on utilise des filtres à sable ou autre support chimiquement inerte. Le sable des filtres peut alors être colonisé par certaines souches issues de la flore autochtone de l'eau minérale.

Par ailleurs, le dioxyde de manganèse ou bioxyde de manganèse est un agent filtrant bien connu utilisé dans les appareils purificateurs d'eau domestique, dans les installations de purifications urbaines ou dans les installations industrielles pour le traitement de l'eau ; ces eaux étant non ou faiblement carbonatées. Un tel agent filtrant fonctionne par oxydation catalytique. Le fer présent dans l'eau sous forme $Fe^{2+}$ est oxydé rapidement en présence de $MnO_2$ et d'un agent oxydant en $Fe^{3+}$ et précipite sous forme d'hydroxyde de fer ($Fe_2O_3$, $nH_2O$) autour des grains d'oxyde de manganèse.

En tant qu'agent filtrant, on a notamment utilisé un produit appelé « green sand » existant naturellement ou préparé en déposant un film de bioxyde de manganèse hydraté ($MnO_2$, $H_2O$), sur la surface des particules d'un support tel que, par exemple, l'argile acide, le sable de quartz, l'anthracite, la zéolite etc.

Une étude parue dans Water and Waste Treatment journal 03.92 p. 30 à 35, expose de façon résumée mais de manière assez exhaustive l'état de l'art antérieur en ce qui concerne l'élimination du fer et du manganèse de l'eau potable.

Cet article rappelle que la méthode générale d'élimination du fer et du manganèse réside dans l'oxydation catalytique.

Deux types de filtres catalytiques sont connus: le bioxyde de manganèse « greensand » (dépôt de bioxyde de manganèse sur un support) ou le bioxyde de manganèse naturel.

Cet article indique ensuite que le procédé requiert une étape d'aération, c'est-à-dire de contact avec un agent oxydant pour assurer la réaction :

$$2Fe^{2+} + 1/2O_2 + H_2O \rightarrow 2Fe^{3+} + 2OH^-$$

le bioxyde de manganèse jouant le rôle de catalyseur.

Il est évident qu'un tel procédé ne saurait être appliqué aux milieux fortement réducteurs à moins d'éliminer tout le gaz carbonique dissous. En d'autres termes, le procédé usuel mettant en oeuvre le bioxyde de manganèse implique un milieu oxydant.

L'oxydant mis en oeuvre peut être une forme oxydée du chlore, ce qui permet en outre de contrôler le développement de la flore dans le lit de filtration.

Le document DE 241 571 décrit un procédé de démanganisation ou déferrisation d'eau de puits ou d'eau domestique consistant à faire passer l'eau dans un filtre de Bioxyde de manganèse comme ceci est décrit colonne 2, page 1, ligne 50 à page 2, colonne 2, ligne 3.

Préalablement à l'étape de démanganisation ou déferrisation, l'eau passe au travers d'un récipient rempli de craie (carbonate de calcium) pour éliminer l'acide carbonique (Kohlensäure).

Le procédé du document DE 241 571 renforce le préjugé selon lequel le bioxyde de manganèse ne peut être utilisé pour éliminer le fer à partir d'eaux fortement réductrices, car celui-ci enseigne que l'acide carbonique doit être préalablement éliminé.

Le document XP 002074960 décrit un procédé en trois étapes nécessitant l'addition préalable d'un agent chlorant c'est-à-dire d'un oxydant. Au contraire, l'invention concerne un procédé de traitement des eaux minérales ferrugineuses, riches en gaz carbonique, qui sont donc réductrices.

De même le brevet US 5 082 570 requiert l'oxydation préalable des contaminants (colonne 7, lignes 26 à 34) ce qui est encore une fois incompatible avec une eau riche en gaz carbonique.

En fait, tous les procédés de l'art antérieur requièrent un agent oxydant ; cette fonction pouvant être remplie par exemple par l'intermédiaire d'une étape d'aération et/ou par un dérivé chloré.

De manière inattendue la Demanderesse a trouvé qu'il était possible de mettre en oeuvre un procédé d'élimination de fer à l'aide de bioxyde de manganèse dans les eaux réductrices telles que les eaux ferrugineuses riches en gaz carbonique.

L'objet de la présente invention est de proposer un nouveau procédé de traitement des eaux ferrugineuses, riches en gaz carbonique donc réductrices, sans réduction de la carbonatation, sans perte de minéralisation et sans modification de la flore autochtone.

Un autre objet de la présente invention est de proposer un procédé plus économique, notamment en raison du fait qu'il n'est pas nécessaire de décarbonater l'eau, ce qui représente un économie de matériel (colonne d'éclatement, pompe à vide, dégazeur, surpresseur d'air).

Selon la présente invention, le procédé de traitement des eaux minérales ferrugineuses, riches en gaz carbonique est caractérisé en ce que a) on met en contact lesdites eaux avec un matériau à base de bioxyde de manganèse ($MnO_2$) et en ce que b) on récupère les eaux minérales à faible teneur en fer.

Le procédé selon l'invention est notamment remarquable en ce qu'il ne requiert aucun contact avec un agent oxydant supplémentaire tel que l'oxygène ou le chlore.

Par l'expression « eaux minérales ferrugineuses riches en gaz carbonique », on entend notamment les eaux minérales issues de nappes souterraines profondes et qui présentent une teneur en gaz carbonique supérieure ou proche de la saturation. La teneur en gaz carbonique dissout varie de façon significative selon les sources. Cette teneur peut varier communément dans les eaux traitées par le procédé selon l'invention de 0,25 g/l (très faible teneur), à 1,7 g/l (faible teneur), à 7 g/l (teneur élevée) jusqu'à 13 g/l (teneur très élevée). Avantageusement cette teneur pourra varier de 1,7 g/l à 7 g/l. Au sens de la présente invention, les eaux minérales à traiter présenteront de préférence une teneur en gaz carbonique supérieure ou égale à environ 2,5 g/l. Ces eaux possèdent donc un pH acide, généralement compris entre 4.2 et 6.6 Elles sont réductrices, c'est à dire que leur potentiel rédox est négatif de l'ordre de ou inférieur à -20mV.

Ces eaux minérales se différencient donc fondamentalement des eaux dites de surface ou peu profondes qui, en premier lieu, ne sont pas carbonatées ou seulement légèrement carbonatées et qui de plus, sont à pH neutre ou très légèrement acides et sont de nature oxydante (potentiel rédox positif ou faiblement négatif).

On donne ci-après la composition moyenne d'une eau minérale ferrugineuse riche en gaz carbonique telle que l'on peut l'obtenir à partir des sources bien connues:

- fer ferrique $Fe^{3+}$ 0,5 ppm
- fer ferreux $Fe^{2+}$ 5,0 ppm
- manganèse 0,8 ppm
- gaz carbonique 2,3 g/l
- potentiel rédox -20 mV

La teneur en fer des eaux minérales destinées à être traitées selon le procédé de l'invention est généralement comprise entre 0.5 et 12 ppm. En deçà de 0.5 ppm, il ne sera en effet pas nécessaire de mettre en oeuvre le procédé. Lorsque l'eau minérale à traiter contient une certaine quantité de fer ferrique, ce fer déjà précipité se dépose à la surface du lit filtrant et provoque une perte de charge qui limite la durée des cycles. Une préfiltration, par exemple sur un filtre à sable, supprime cette perte de charge.

Le bioxyde de manganèse qui peut être utilisé dans le cadre du procédé selon l'invention peut être d'origine ou de formes très diverses.

Il peut s'agir d'un bioxyde de manganèse naturel ou de synthèse. Ces formes de bioxyde de manganèse sont bien connues. Comme bioxyde de manganèse de synthèse, on peut citer les bioxydes de manganèse de type électrolytique comme décrit par exemple dans le brevet français n° 2 101579 ou le brevet américain 5 082 570. Ces deux documents pourront d'ailleurs être pris en compte pour la description de l'art antérieur tel qu'il a été discuté dans le préambule de la description. La structure du bioxyde de manganèse pourra être par exemple de type bêta ou gamma ou de toute autre forme connue y compris les mélanges de ces différents types.

La teneur en bioxyde de manganèse du matériau est une caractéristique importante du procédé selon l'invention. En effet, ce matériau doit présenter de préférence une teneur minimum de 45% et avantageusement supérieure à 75% ou encore mieux supérieure à 80 % (exprimée en $MnO_2$).

De telles qualités de bioxyde de manganèse correspondent par exemple à la qualité utilisée pour la préparation des aciers spéciaux.

La granulométrie du bioxyde de manganèse sera adaptée par l'homme du métier. Celle-ci devra être suffisante pour ne pas conduire à un colmatage du filtre, mais à l'inverse, elle ne devra pas être trop élevée pour assurer le maximum de contact entre l'eau et les grains de matériau. Il est évident que l'homme du métier saura avec ses connaissances de base ou, éventuellement, après des manipulations simples déterminer l'intervalle de granulométrie souhaité. Le bioxyde de manganèse présente une granulométrie comprise généralement entre 0.3 et 0.75 mm bien que cet intervalle ne soit pas critique et ne limite pas la portée de la présente invention.

Une autre différence d'avec les procédés communément mis en oeuvre pour les eaux de surface réside dans la forme du dioxyde de manganèse qui est utilisé sous forme pure ; l'association à des "sables", telle qu'elle est réalisée dans les procédés de la technique antérieure, a ici un effet négatif car la teneur en bioxyde de manganèse est trop faible. En effet, et c'est là une des caractéristiques de la présente invention, le bioxyde de manganèse, outre son rôle dans l'oxydation catalytique, remplit une fonction de piégeage du fer (échange d'ions) et d'oxydation du manganèse. Sans vouloir être liée en aucune manière par une interprétation scientifique, la Demanderesse pense que le procédé selon l'invention met en jeu diverses réactions qui peuvent être schématisées par la suite de réactions suivantes :

$$2\ MnO_2 \rightarrow MnO + \tfrac{1}{2}\ O_2 \qquad\qquad (\text{réaction 1})$$

$$2\ Fe^{2+} + \tfrac{1}{2}\ O_2 \rightarrow 2\ Fe^{3+} + 2\ OH^- \qquad\qquad (\text{réaction2})$$

$$MnO_2 + 2\ OH^- \rightarrow MnO_3H_2{}^{2-} \qquad\qquad (\text{réaction 3})$$

$$3\ MnO_3H_2{}^{2-} + Fe^{3+} \rightarrow Fe(MnO_3H_2{}^{2-}) \qquad\qquad (\text{réaction 4})$$

Selon un autre aspect de la présente invention le facteur de réduction est suffisant pour éliminer une quantité de fer telle que l'eau après traitement soit compatible avec les législations en vigueur. Ce facteur est largement supérieur à 10 dans la plupart des cas et généralement supérieur à 100.

Le procédé selon l'invention comprend également une étape de régénération effectuée périodiquement.

La régénération des grains d'oxyde de manganèse est classiquement effectuée par un lavage acide du lit, au cours duquel les complexes hydroxyde ferrique/oxyde de manganèse se dissocient, ce qui permet de former des sels de fers solubles et de régénérer l'activité déferrisante des lits de MnO. Dans le cas du procédé selon l'invention, la désorption de l'hydroxyde de fer doit être complétée par une oxydation du manganèse susceptible d'être réduit en monoxyde de manganèse pendant la phase de traitement, en particulier si le potentiel d'oxydoréduction de l'eau est bas, ce qui est généralement le cas des eaux carbonatées.

Il s'agit donc d'un mode de réalisation particulièrement avantageux du procédé selon la présente invention. Selon cette variante préférée le procédé de traitement est caractérisé en ce que le matériau à base de bioxyde de manganèse ($MnO_2$) est régénéré par voie chimique, éventuellement précédée d'une régénération par voie mécanique, ladite régénération chimique comprenant une étape de régénération acide et une étape de régénération oxydante.

De préférence, au cours du procédé de régénération, l'étape d'acidification est effectuée avant l'étape de régénération oxydante.

Un autre mode de réalisation possible consiste à inverser les étapes d'acidification et d'oxydation.

En outre, on a trouvé qu'il était préférable de compléter cette régénération chimique par une étape préalable de régénération mécanique.

Ce processus de régénération comprenant les différentes étapes fait de préférence partie intégrante du procédé selon l'invention.

De ce fait, l'invention a également pour objet un procédé de traitement caractérisé en ce que le matériau à base de bioxyde de manganèse ($MnO_2$) régénéré est réutilisé pour mettre en oeuvre le procédé de traitement des eaux ferrugineuses décrit précédemment. Le procédé peut être recommencé plusieurs fois. Les essais ont montré que le procédé pouvait être utilisé au moins une année sans perte d'activité notable du lit filtrant.

Une préfiltration, par exemple sur un filtre à sable, supprime la perte de charge et permet une meilleure utilisation de la capacité catalytique de l'oxyde de manganèse entre deux régénérations.

L'étape d'acidification est généralement effectuée par une solution d'acide fort qui peut être notamment choisi parmi l'acide sulfurique, l'acide nitrique, l'acide chlorhydrique, de préférence l'acide sulfurique. Une solution d'acide 1N s'avère en général suffisante bien qu'une variation de la concentration en acide ne soit pas critique. On pourra utiliser un volume de solution acide allant de une à cinq fois le volume du lit à traiter, bien que là aussi cet intervalle ne soit pas critique.

En ce qui concerne l'étape d'oxydation, l'oxydant doit être une solution fortement oxydante, par exemple de permanganate de potassium ($KMnO_4$). Cet oxydant permet non seulement d'oxyder l'oxyde de manganèse réduit lors de la déferrisation et éventuellement de la démanganisation (si l'eau à traiter contient en outre du manganèse à l'état dissous) mais aussi conduit à des effluents non polluants, contenant juste des ions potassium.

L'étape de régénération est effectuée périodiquement. Le seuil pour la concentration en fer au-delà duquel une régénération devra être effectuée sera aisément déterminé par l'homme du métier. Cela dépendra de la valeur de seuil choisie, qui sera fonction la plupart du temps des valeurs fixées par les législations nationales. Si l'on considère que la valeur est de 0,05 ppm on pourra traiter à titre indicatif un volume de liquide supérieur à plus de 1000 fois le volume du lit. Ce seuil dépendra également du temps de contact entre le liquide et le lit. Un temps de trois minutes ou de préférence supérieur à cinq minutes, notamment d'environ six minutes sera généralement suffisant.

L'utilisation de ce procédé de déferrisation pour des eaux minérales présente les avantages suivants :

- ■ Il n'est pas nécessaire de décarbonater l'eau, ce qui représente une économie en matériel (colonne d'éclatement, pompe à vide, dégazeur),
- ■ Les pertes en gaz carbonique sont fortement réduites, ce qui présente un intérêt dans le cas de ressources à faible niveau de carbonatation.
- ■ Contrairement aux techniques d'oxydation par l'air, il n'y a pas de risque de modification de la minéralisation caractéristique des eaux,
- ■ L'élimination de la phase du procédé traditionnel où l'eau décarbonatée est oxygénée, puis mise en contact avec un sable de silice présente des avantages hygiéniques et microbiologiques notables.

Selon un mode de réalisation préféré le procédé de traitement selon l'invention est caractérisé en ce que le matériau est constitué d'au moins 45 % de manganèse sous forme $MnO_2$.

Selon un autre mode de réalisation le procédé de traitement selon l'invention est caractérisé en ce que le matériau est présent dans une cuve au travers de laquelle circulent les eaux à traiter.

Selon un autre mode de réalisation le procédé de traitement selon l'invention est caractérisé en ce qu'il comprend une étape préalable d'élimination de fer ferrique contenu dans les eaux minérales, si celui-ci est présent dans l'eau avant traitement.

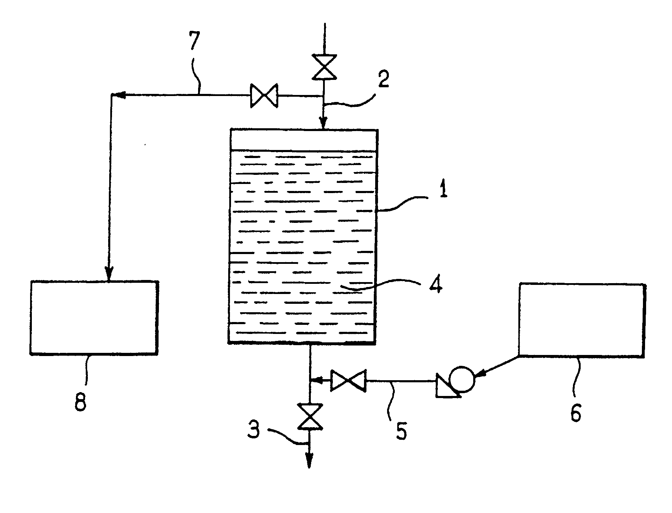

L'invention est maintenant illustrée par un exemple de réalisation mis en oeuvre dans un dispositif dont le schéma est représenté à la figure unique annexée.

Sur cette figure, une cuve 1 munie d'une arrivée 2 et d'une sortie 3 contient du sable de bioxyde de manganèse 4. Au niveau de la sortie 3 est branchée l'arrivée 5 d'un réservoir 6 pouvant contenir la ou les solutions régénérantes. Au niveau de l'arrivée 2 est branché un conduit 7 pour évacuer l'éluat des solutions régénérantes vers un réservoir 8. Des robinets permettant de fermer et d'ouvrir les différents conduits selon la phase du procédé.

EXEMPLE

A. Filtration

Dans une cuve 1 de 210 litres munie d'une arrivée 2 et d'une sortie 3, sont présents 200 litres de sable de bioxyde de manganèse 4 présentant les caractéristiques suivantes :

| | |
|---|---|
| Teneur en manganèse (%) | 44 |
| Teneur en fer (%) | 5 |
| Teneur en $Fe_2O_3$ (%) | 10 |
| Dimension min. (mm) | 0.3 |
| Dimension max. (mm) | 0.71 |
| Surface spécifique ($m^2/g$) | $\geq 14$ |

On fait circuler de l'eau ferrugineuse, riche en gaz carbonique ayant la composition suivante :

| | Avant traitement | Eau traitée |
|---|---|---|
| Calcium (mg/l) | 285 | 285 |
| Bicarbonates (mg/l) | 1180 | 1180 |
| Fer (mg/l) | 5.5 | <0.05 |
| Gaz carbonique (g/l) | 2.3 | 2.3 |

A la sortie de la cuve on mesure la teneur en fer et l'on arrête l'expérience lorsque la teneur en fer de l'eau après traitement atteint la valeur de 0,05 ppm. En effet, cette valeur indique une saturation de la capacité d'échange d'ions de l'oxyde de manganèse, qui doit alors être régénéré.

Pour un temps de contact de l'eau avec le dioxyde de manganèse de six minutes, on a pu traiter 240 000 litres d'eau, soit 1200 fois le volume de dioxyde de manganèse. La quantité de fer fixée sur le filtre était de 6.6 g de fer par litre de sable.

Après un éventuel détassage du lit de bioxyde de manganèse, on procède à l'étape de régénération.

B. Régénération du lit de bioxyde de manganèse

B.1 Régénération acide

A température ambiante, on lave le lit d'oxyde de manganèse à contre-courant avec une solution d'acide sulfurique ($H_2SO_4$) 0.5N. Le volume de la solution est de 2.5 fois le volume du lit filtrant (500 litres dans l'exemple). Le débit de la solution régénérante est de 2v/v/h (soit 400 l/h dans l'exemple).

On rince ensuite le filtre à contre-courant avec 4 volumes (800 litres) d'eau industrielle envoyés à 2 v/v/h.

B.2 - Régénération oxydante

La régénération oxydante peut être réalisée en faisant circuler à contre-courant 1 volume de $KMnO_4$ à 9 g/l, à un débit de 1 v/v/h, puis en rinçant le filtre à contre-courant à un débit de 1 v/v /h avec 4 volumes d'eau exempte de fer et de manganèse.

Après une régénération oxydante, on a pu effectuer quatre nouveaux cycles de production avec une capacité de traitement de 1200 volumes de lit. La régénération oxydante est donc réalisée une fin de production sur quatre.

B.3 - Dénombrement microbiologique effectué en cours de production, en entrée et sortie de filtre

Le tableau ci-dessous décrit un exemple de dénombrement microbiologique réalisés sur l'eau avant et après filtration.

On a testé des espèces caractéristiques, susceptibles d'être retrouvées après une contamination microbienne de l'eau.

| Volume traité | Echantillon | Charge totale 24 h - 37°C (en ufc/ml) | Charge totale 72 h - 20°C (en ufc/ml) | Coliformes totaux Entérocoques *P. Aeruginosa S. aurens* |
|---|---|---|---|---|
| 110 volumes soit 22 m³ | Avant filtration | < 1 | < 1 | absence |
| | Après filtration | < 1 | < 1 | absence |
| 680 volumes soit 136 m³ | Avant filtration | < 1 | < 1 | absence |
| | Après filtration | < 1 | 5 | absence |
| 1030 volumes soit 206 m³ | Avant filtration | <1 | <1 | absence |
| | Après filtration | <1 | 10 | absence |

Ce tableau montre l'absence de développement ou de modification de la flore bactérienne au cours du procédé selon l'invention.

**Revendications**

1.  Procédé de traitement des eaux minérales ferrugineuses ayant une teneur en gaz carbonique supérieure à 0,25 g/l, **caractérisé en ce que** a) on met en contact lesdites eaux avec un matériau à base de bioxyde de manganèse ($MnO_2$) et **en ce que** b) on récupère les eaux minérales traitées à faible teneur en fer.

2.  Procédé de traitement selon la revendication 1, **caractérisé en ce que** le matériau à base de bioxyde de manganèse ($MnO_2$) est régénéré par voie chimique, éventuellement précédée d'une régénération par voie mécanique, ladite régénération chimique comprenant une étape de régénération acide et une étape de régénération oxydante.

3.  Procédé de traitement selon la revendication 2, **caractérisé en ce que** le matériau à base de bioxyde de manga-

nèse ($MnO_2$) est régénéré par voie chimique, éventuellement précédée d'une régénération mécanique, l'étape de régénération acide étant effectuée avant l'étape de régénération oxydante.

**4.** Procédé de traitement selon la revendication 2 ou 3, **caractérisé en ce que** l'étape de régénération acide est effectuée avec une solution d'acide fort, notamment choisi dans le groupe constitué par l'acide sulfurique, l'acide nitrique, l'acide chlorhydrique.

**5.** Procédé de traitement selon la revendication 2 ou 3, **caractérisé en ce que** l'étape de régénération oxydante est effectuée avec une solution fortement oxydante, notamment de permanganate de potassium.

**6.** Procédé de traitement selon l'une des revendications 2 à 5, **caractérisé en ce que** le matériau à base de bioxyde de manganèse ($MnO_2$) est réutilisé pour mettre en oeuvre le procédé selon la revendication 1.

**7.** Procédé de traitement selon la revendication 6, **caractérisé en ce qu'**il est recommencé plusieurs fois.

**8.** Procédé de traitement selon la revendication 1, **caractérisé en ce que** la concentration en gaz carbonique des eaux minérales est proche de la saturation ou supérieure à la saturation.

**9.** Procédé de traitement selon la revendication 1, **caractérisé en ce que** la teneur en fer des eaux minérales est comprise entre 0.5 ppm et 12 ppm.

**10.** Procédé de traitement selon l'une des revendications précédentes, **caractérisé en ce que** le matériau est constitué d'au moins 45 % de manganèse sous forme de bioxyde de manganèse ($MnO_2$).

**11.** Procédé de traitement selon l'une des revendications précédentes, **caractérisé en ce que** le matériau est présent dans une cuve au travers de laquelle circulent les eaux à traiter.

**12.** Procédé de traitement selon l'une des revendications précédentes, **caractérisé en ce qu'**il comprend une étape préalable d'élimination de fer ferrique contenu dans les eaux minérales.

**Claims**

**1.** Process for treating ferruginous mineral waters with a carbon dioxide content of greater than 0.25 g/l, **characterized in that** a) the said waters are placed in contact with a material based on manganese dioxide ($MnO_2$) and **in that** b) the treated mineral waters with a low iron content are recovered.

**2.** Treatment process according to Claim 1, **characterized in that** the material based on manganese dioxide ($MnO_2$) is regenerated chemically, optionally preceded by a mechanical regeneration, the said chemical regeneration comprising a step of acidic regeneration and a step of oxidizing regeneration.

**3.** Treatment process according to Claim 2, **characterized in that** the material based on manganese dioxide ($MnO_2$) is regenerated chemically, optionally preceded by a mechanical regeneration, the acidic regeneration step being carried out before the oxidizing regeneration step.

**4.** Treatment process according to Claim 2 or 3, **characterized in that** the acidic regeneration step is carried out with a strong acid solution chosen especially from the group consisting of sulphuric acid, nitric acid and hydrochloric acid.

**5.** Treatment process according to Claim 2 or 3, **characterized in that** the oxidizing regeneration step is carried out with a strongly oxidizing solution, especially of potassium permanganate.

**6.** Treatment process according to one of Claims 2 to 5, **characterized in that** the material based on manganese dioxide ($MnO_2$) is reused to carry out the process according to Claim 1.

**7.** Treatment process according to Claim 6, **characterized in that** it is recommenced several times.

**8.** Treatment process according to Claim 1, **characterized in that** the carbon dioxide concentration of the mineral waters is close to saturation or greater than saturation.

9. Treatment process according to Claim 1, **characterized in that** the iron content of the mineral waters is between 0.5 ppm and 12 ppm.

10. Treatment process according to one of the preceding claims, **characterized in that** the material consists of at least 45% manganese in the form of manganese dioxide ($MnO_2$).

11. Treatment process according to one of the preceding claims, **characterized in that** the material is present in a tank through which circulate the waters to be treated.

12. Treatment process according to one of the preceding claims, **characterized in that** it comprises a preliminary step of removal of ferric iron contained in the mineral waters.

**Patentansprüche**

1. Verfahren zur Behandlung von eisenhaltigen Mineralwässern mit einem Kohlendioxid-Gehalt von mehr als 0,25 g/l, **dadurch gekennzeichnet, dass** man a) die Wässer mit einem Material auf der Basis von Mangandioxid ($MnO_2$) in Kontakt bringt und man b) die behandelten Mineralwässer mit einem geringen Eisengehalt gewinnt.

2. Verfahren zur Behandlung nach Anspruch 1, **dadurch gekennzeichnet, dass** das Material auf der Basis von Mangandioxid ($MnO_2$) auf chemischem Weg regeneriert wird, dem gegebenenfalls eine Regeneration auf mechanischem Weg vorangeht, wobei die chemische Regeneration einen Schritt mit saurer Regeneration und einen Schritt mit oxidierender Regeneration umfasst.

3. Verfahren zur Behandlung nach Anspruch 2, **dadurch gekennzeichnet, dass** das Material auf der Basis von Mangandioxid ($MnO_2$) auf chemischem Weg regeneriert wird, dem gegebenenfalls eine mechanische Regeneration vorangeht, wobei der Schritt der sauren Regeneration vor dem Schritt der oxidierenden Regeneration bewirkt wird.

4. Verfahren zur Behandlung nach Anspruch 2 oder 3, **dadurch gekennzeichnet, dass** der Schritt der sauren Regeneration mit einer Lösung einer starken Säure bewirkt wird, die insbesondere ausgewählt ist aus der Gruppe bestehend aus Schwefelsäure, Salpetersäure, Chlorwasserstoffsäure.

5. Verfahren zur Behandlung nach Anspruch 2 oder 3, **dadurch gekennzeichnet, dass** der Schritt der oxidierenden Regeneration mit einer stark oxidierenden Lösung, insbesondere von Kaliumpermanganat, bewirkt wird.

6. Verfahren zur Behandlung nach einem der Ansprüche 2 bis 5, **dadurch gekennzeichnet, dass** das Material auf der Basis von Mangandioxid ($MnO_2$) wiederverwendet wird, um das Verfahren nach Anspruch 1 durchzuführen.

7. Verfahren zur Behandlung nach Anspruch 6, **dadurch gekennzeichnet, dass** es mehrere Male wiederbegonnen wird.

8. Verfahren zur Behandlung nach Anspruch 1, **dadurch gekennzeichnet, dass** die Kohlendioxid-Konzentration der Mineralwässer nahe der Sättigung oder über der Sättigung liegt.

9. Verfahren zur Behandlung nach Anspruch 1, **dadurch gekennzeichnet, dass** der Eisengehalt der Mineralwässer bei 0,5 ppm bis 12 ppm liegt.

10. Verfahren zur Behandlung nach einem der vorangehenden Ansprüche, **dadurch gekennzeichnet, dass** das Material aus mindestens 45% Mangan in Form von Mangandioxid ($MnO_2$) zusammengesetzt ist.

11. Verfahren zur Behandlung nach einem der vorangehenden Ansprüche, **dadurch gekennzeichnet, dass** das Material in einem Tank vorliegt, durch den hindurch die zu behandelnden Wässer zirkulieren.

12. Verfahren zur Behandlung nach einem der vorangehenden Ansprüche, **dadurch gekennzeichnet, dass** es einen vorgeschalteten Schritt der Eliminierung von Eisen(III), das in den Mineralwässern enthalten ist, umfasst.